# EUROPEAN PATENT APPLICATION

(11) **EP 0 637 158 A1**
(43) Date of publication of application: **01.02.1995**
(21) Application number: 94305639.0
(22) Date of filing: 29.07.1994
(51) Int. Cl.: H04M 3/00, H04M 1/64

(54) **Telephone answering system**

(30) Priority: 30.07.1993 US 99761
(71) Applicant: TEXAS INSTRUMENTS INCORPORATED, Dallas Texas 75265 (US)
(72) Inventor: Stella, Michel G., Dallas, Texas 75248 (US); Durand, Philippe J. D., F-75010 Poissonniere (FR); Gunawardana, Rujdeev R., Bedford, Bedfordshire, MK41 7TT (GB); McGarity, Kevin J., Dallas, Texas 75248 (US)
(74) Representative: Blanco White, Henry Nicholas

(57) **Abstract**

The present invention provides a stand-alone telephone answering system 8 constructed in a single integral unit with a telephone line interface 20 to a telecommunications network. The telephone answering system 8 further comprises a recording and playback system 16 and a message storage memory 18, coupled to the recording and playback system 16. A controller 10 is operable to control the operation of the stand-alone telephone answering system 8. The user interacts with the stand-alone telephone answering system 8 through a display 26 and a data input device 24 coupled to the controller 10. The controller 10 controls operation of the stand-alone telephone answering system 8 based upon caller identification information stored in a caller directory memory 12 coupled to the controller 10.

## Description

### TECHNICAL FIELD OF THE INVENTION

This invention relates generally to the field of telecommunications devices, and more particularly to an improved stand-alone telephone answering system and method for operating the same.

### BACKGROUND OF THE INVENTION

The telephone provides the primary form of communication for individuals and businesses today. As society becomes more mobile and individuals are less often at home or their office, the telephone becomes a less effective way of communicating. Today, individuals and businesses use telephone answering machines to overcome this problem. These machines answer the telephone and allow a caller to leave a message that a user can play back later.

Original answering machines recorded and stored messages on analog tape. Although a convenient method for recording messages, analog answering machines lack flexibility and contain little built-in intelligence. Messages can only be played back in the order received and individual messages cannot be easily saved or forwarded.

The use of digital technology in answering machines provides a more flexible device with an opportunity to build more intelligence into the system. Some digital answering machines take advantage of digital voice algorithms, but fail to take advantage of digital technology to implement features such as message forwarding, message broadcasting, or message prioritizing. Large voice mail systems and paging systems do implement some of these features. However, these systems are typically large computer or PC-based systems that are expensive and inconvenient for consumers to purchase and use.

Therefore, a need has arisen to provide a small, low-cost, stand-alone answering machine that provides features of larger voice mail systems. Specifically, a need has arisen for a low-cost, stand-alone answering machine that provides consumers with features such as message forwarding, message broadcasting, and message prioritization.

### SUMMARY OF THE INVENTION

In accordance with the present invention, a telephone answering system is provided which substantially eliminates or reduces disadvantages and problems associated with prior telephone answering machines. The telephone answering system includes an interface to the telecommunications network. Messages are recorded and stored in digital format in a message storage memory. A playback system reads the digital data from the message storage memory and plays back the message. A controller is configured to control the overall operation of the answering machine. A display and data input device are coupled to the controller and provide for user interaction. The controller accesses a caller directory memory containing caller identification information used in the operation of the answering machine.

According to one embodiment of the present invention, the caller identification information of the present invention includes an identification number that the answering machine uses to determine the caller's identity. The caller identifies himself by entering a number that is received by the system as a plurality of DTMF tones. The answering machine is able to provide different pre-selected options to each caller by determining the identity of the caller by comparing the DTMF tones the caller entered to the caller identification information stored in the caller directory memory.

According to another aspect of the present invention, a method for operating a telephone answering system is provided. The method includes the step of storing caller identification information in a caller directory memory. The answering machine receives a call and the associated caller identification information through a telephone line interface. The caller is identified from the caller identification information by comparing that information to the information stored in the caller directory memory. The message is then received and stored in a message storage memory.

An important technical advantage of the present invention inheres in its ability to include in a low-cost, stand-alone answering system, all the features typically found in the larger PC-based pager and voice mail systems. The use of digital technology provides several technical advantages not found in present answering machines. These technical advantages include automatic selective forwarding of messages to other locations based upon caller identification information, configuring multiple mailboxes for callers with different caller identification information, providing different outgoing messages to different users, playing messages in priority order, and automatic redialing with a single-key. Another important technical advantage of the invention is the ability to broadcast messages to a plurality of callers contained in the caller directory memory and to receive acknowledgments from these broadcast messages.

### BRIEF DESCRIPTION OF THE DRAWINGS

For a more complete understanding of the present invention and the advantages thereof, reference is now made to the following description taken in conjunction with the accompanying drawings in which like reference numbers indicate like features and wherein:
FIGURE 1 illustrates a schematic diagram of the telephone answering system of the present invention;
FIGURE 2 illustrates a flow chart of the operation of the telephone answering system of the present invention.

### DETAILED DESCRIPTION OF THE INVENTION

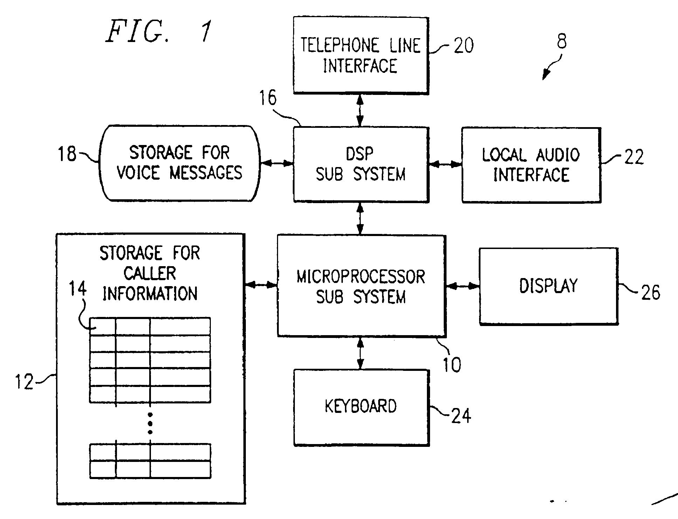

FIGURE 1 is a schematic diagram that shows the hardware connections of a stand-alone telephone answering system, indicated generally at 8, constructed according to the teachings of the present invention. Telephone Answering System 8 comprises a microprocessor control system 10, which may comprise a suitable digital processor such as an Oki MSM 65524GS microprocessor. The control system 10 monitors the input and output devices of the telephone answering system 8 and controls the actions taken by the stand-alone telephone answering system 8. A caller directory memory 12 is coupled to control system 10. The caller directory memory 12 contains a caller identification information table 14. The caller identification information stored in table 14 may include a caller identification number, the name of the caller, and the phone number of the caller. The caller directory memory 12 is comprised of a non-volatile storage memory such as a flash EEPROM. The microprocessor control system 10 is configured to read from and write to the caller directory memory 12. The control system 10 coupled to the caller directory memory 12 is included within the telephone answering system 8 to provide a variety of operations found previously only in larger, more expensive voice mail systems. For example, the present invention implements message forwarding, alarm detection and notification, message prioritizing, and message broadcasting.

A digital signal processing ("DSP") subsystem 16 is connected to microprocessor control system 10 and may comprise, for example, a suitable digital signal processor such as a Texas Instruments TMS32016 processor with an integrated application specific integrated circuit (ASIC). The DSP subsystem 16 provides message recording and playback. Messages are stored and retrieved from a message storage memory 18 coupled to the DSP subsystem 16. The message storage memory 18 may comprise, for example, 8 megabits of RAM.

A telephone line interface 20 is coupled to the DSP subsystem 16. Messages and caller identification information are received through the telephone line interface 20 that connects the telecommunications network to the stand-alone telephone answering system 8. Messages are also played back through the telecommunications network through the telephone line interface 20 under the control of the DSP subsystem 16. The DSP subsystem 16 further provides DTMF detection and generation through the telecommunications network through the telephone line interface 20.

A local audio interface 22 provides a separate microphone and speaker interface to the DSP subsystem 16. The microphone provides local recording of messages by the DSP subsystem 16 for storage at the message storage memory 18. A speaker coupled to the DSP subsystem 16 is provided for playback of voice messages stored in the message storage memory 18.

A user interacts with the stand-alone telephone answering system 8 through a keyboard input 24 and an LCD display 26. The display 26 consists of two lines of 31 characters, two-digit counters, and several icons. Two counters indicate the number of calls received and the number of messages stored in message storage memory 18. A memory icon displays the utilization of message storage memory 18. Keyboard 24 contains 64 keys. The right-hand side of the keyboard 24 provides certain dedicated answering machine features, including a MEMO key for recording local messages, a MONITOR key to monitor the activity on the telephone line, a DELETE key to delete the message that was just played, a PAUSE key to pause playback of messages, a PLAY key to play stored messages, a PREVIOUS key to play a previous message, a NEXT key to play the next message, an ANSWER ON key to toggle the machine into and out of answering mode, and VOLUME keys to decrease or increase the playback volume level. The left-hand side of the keyboard features an alphanumeric key pad with five function keys.

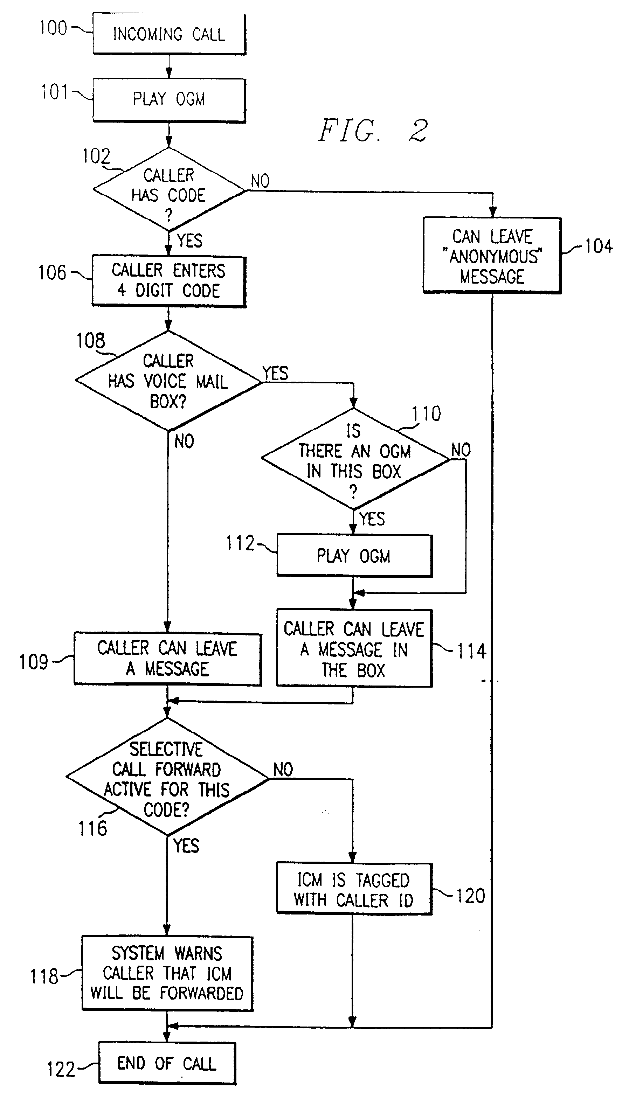

Aspects of the stand-alone telephone answering system 8 constructed in accordance with the present invention may be better understood in connection with a flow chart representation of the steps necessary to perform these functions. FIGURE 2 is a flow chart that represents the decision-making process carried out by the microprocessor control system 10 in handling an incoming call.

The program is initiated at 100 upon receiving an incoming call through the telephone line interface 20. At step 101, the DSP subsystem 16 plays back an outgoing message ("OGM") through the telephone line interface 20 to the caller. In the preferred embodiment, there are four types of outgoing messages a user may select: (1) two standard outgoing messages in which the caller is invited to leave a message, (2) a special outgoing message in which the caller is not invited to leave a message, and (3) menu messages, in which the caller can access different types of recorded information by entering DTMF codes on their phone. The DSP subsystem 16 performs the function of DTMF tone detection to recognize the caller's input. Menu messages are made up of an introduction and several subparts. A typical announcement would be: "If you would like information about X, press 1. If you want information about Y, press 2. If you want information about Z, press 3." A different outgoing message is played based upon the caller's selection of the menu choices. Menu messages may also be configured with an "immediate assistance" button. According to one embodiment of the present invention, a caller may enter the key "0" during playback of the menu message. The stand-alone telephone answering system 8 will beep over the local audio interface 22 in an attempt to attract someone's attention to the call. If the call is not answered, the DSP subsystem 16 plays back an outgoing message to indicate that no one is available to answer the call.

Referring again to Figure 2, the method proceeds to step 102, in which a decision is made based upon whether the caller has a proper caller identity code. According to one embodiment of the present invention, the DSP subsystem 16 detects the caller identification code through the telephone line interface 20. If an improper caller identification code is entered or no code is entered, program flow proceeds to step 104 in which the caller may leave an anonymous message. The anonymous message is received by the DSP subsystem 16 through the telephone line interface 20 and stored in the message storage memory 18. Upon completion of the message, program flow continues to step 122 in which the call is terminated.

In the case of identified messages, the caller enters a 4-digit caller identification code consisting of DTMF tones in step 106. The DSP subsystem 16 detects the code and passes the information to the microprocessor subsystem 10 in which the microprocessor subsystem 10 determines whether a valid caller identification code has been entered. The microprocessor subsystem 10 compares the 4-digit code to the caller identification information stored in the caller information table 14 contained in the caller directory memory 12. The caller directory table 14 contains a possibility of up to 150 names, phone numbers, and caller identification information. Each name may be associated with a special 4-digit privilege code that identifies the caller. The caller directory table 14 can be displayed locally on display 26. Additional caller information can be entered into the caller table 14 directory locally using the keyboard 24. Caller identification information may also be updated remotely through the telephone line interface 20.

It should be understood that 4-digit caller identification is presented solely as an exemplary embodiment in order to teach advantages of the system of the present invention. The present invention may use other forms of caller identification information not limited to the 4-digit caller identification codes. For example, other forms of caller identification information may include caller identification signals received automatically from the telephone network or speech recognition of the caller through the telephone line interface performed by algorithms stored in the DSP subsystem 16.

Upon receiving a valid 4-digit identification code in step 106, program flow continues to step 108. At step 108, the microprocessor subsystem 10 determines if the caller associated with the entered caller identification number has a voice mailbox. According to one embodiment of the present invention, the user can define up to five voice mailboxes for privileged users. Each voice mailbox is associated with a set of caller identification information. In addition, the user can record a personalized outgoing message for each mailbox and program when the voice mailboxes are active. If the information in the caller directory table 14 indicates that the caller is identified with a voice mailbox and that voice mailbox is active, program flow continues to step 110. Use of voice mailboxes provides the technical advantage of allowing playback of different outgoing messages based upon the caller identification information. In addition, the user of the stand-alone telephone answering system 8 may selectively playback messages based upon which mailbox the messages are stored in.

At step 110, the microprocessor subsystem 10 determines if a personalized outgoing message for this box is stored in the message storage memory 18. If there is a personalized outgoing message, the DSP subsystem 16 plays back the outgoing message through the telephone line interface 20 to the caller. According to one embodiment, the user may select from four types of outgoing messages as previously described.

If it is determined in step 110 that there is no outgoing message in the voice mailbox associated with the caller identification code as the outgoing message has been played in step 112, program flow continues to step 114. In step 114, the caller can leave a message in the mailbox associated with the previously entered caller identification code. Program flow continues at step 116.

If there is no voice mailbox associated with the caller identification code as determined in step 108, a caller can leave a message in step 109 that is recorded by the DSP subsystem 16 and stored in the message storage memory 18. After recording the incoming message in step 109 or step 114, program flow proceeds to decision block 116. In decision block 116, the microprocessor control system 10 determines if the call forward feature is activated for the caller identification code entered in step 106 by looking up the caller identification information contained in the caller directory table 14 stored in the caller directory memory 12. The user can select up to three call forwarding orders, each order containing the information as to when the order is active, which messages are to be forwarded, where the incoming messages should be forwarded, and what outgoing message is to be played to the caller when a call is forwarded. The selective forward feature provides the technical advantage of being able to forward selected messages based upon the caller identification information.

If the selective call forward feature is active for the caller identification code entered in step 106, the DSP subsystem 16 plays back the selected outgoing message through the telephone line interface 20 to the caller. According to one embodiment, the message warns the caller that the incoming message will be forwarded. If the call forwarding is not active, the incoming message is tagged with the caller identification code and stored by the DSP subsystem 16 in the message storage memory 18. Upon storing the tagged message in step 120 or forwarding the message in step 118, the call is completed in step 122.

According to a further embodiment of the present invention, the system 8 includes functionality for playback of messages over the telephone line interface 20 by the DSP subsystem 16 in priority order. In this embodiment, priority playback is based upon the following descending order: (1) local memo messages left at the telephone answering system, (2) messages identified with 4-digit identification codes stored in the caller directory table 14, and (3) anonymous messages.

Still another embodiment of the present invention provides broadcast message capability. The DSP subsystem 16 records an outgoing message at the local audio interface 22 and stores the outgoing message in the message storage memory 18. The user instructs the microprocessor subsystem 10 through the keyboard 24 to select a list of recipients of the forwarded message from the caller directory table 14. Finally, the user may enter the time for broadcast.

The system 8 will then call each of the identified recipients and forward the selected message at the appointed time. Another embodiment of the invention allows the user to build individualized messages based upon individualized caller information stored in the caller directory table 14. For example, the stored caller identification information may include each recipient's name in recorded form such that the name can be included in the outgoing message. The recipient can acknowledge receipt of the broadcast message by entering a valid acknowledgement code. The DSP subsystem 16 receives the acknowledgment code through the telephone line interface 20 and microprocessor subsystem 10 compiles a report of acknowledgements to the broadcast message. The acknowledgement of receipt of the broadcast message may include, but is not limited to, the user entering the "#" key, the "*" key, or the caller's four-digit caller identification code. The DSP subsystem 16 performs the function of DTMF detection to determine if the person called entered a proper acknowledgement.

The broadcast message feature can be used in conjunction with a sensor to perform an alarm notification function. A sensor may be coupled to the control system 10. Once the sensor detects a predetermined event, the control system 10 is notified and determines the telephone number that will receive the alarm notification message. The number is stored in the caller directory table 14 of caller directory memory 12. The DSP subsystem 16 performs the DTMF generation through the telephone line interface 20 in an attempt to call the telephone number determined by the control system 10. Upon completing the connection to the determined number, the DSP subsystem 16 plays back an alarm message stored in the message storage memory 18. The sensor coupled to the control system 10 may include, but is not limited to, an alarm sensor, a temperature sensor, or a smoke detector. This feature may also be used to call a telephone number stored in the caller directory table 14 of caller directory memory 12 when the message storage memory 18 contains a pre-determined amount of messages. For example, the user of the telephone answering system 8 may configure the control system 10 to initiate a telephone call when the DSP subsystem 16 notifies the control system 10 that message storage memory 18 is full or nearly full.

Still another embodiment of the invention includes a special DIAL key on the keyboard 24. If the microprocessor subsystem 10 is waiting for an incoming call and the DIAL key is received, the last phone number dialed is redialed. If the microprocessor subsystem 10 is currently displaying the caller directory table 14 on the display 26 and the DIAL key is entered, the current phone number displayed is automatically dialed. If the microprocessor subsystem 10 has instructed the DSP subsystem 16 to playback a stored message from the message storage memory 18 over the local audio interface 22 and the DIAL key is entered by the user at the keyboard 24, the microprocessor subsystem 10 instructs the DSP subsystem 16 to dial the telephone number stored in the caller directory table 14 associated with the caller identification code, if any, tagged to the current message. Accordingly, the system of the present invention is capable of true one-touch dialing in a variety of contexts due to the storage of selected telephone numbers and caller identification information.

Although the present invention has been described in detail, it should be understood that various changes, substitutions, and alterations can be made hereto without departing from the spirit and scope of the invention as defined by the appended claims.

## Claims

1. A telephone answering system in a single integral unit operable in conjunction with a telecommunications network, comprising:
a telephone line interface;
a recording and playback system coupled to said telephone line interface;
a message storage memory coupled to said recording and playback system;
a controller operable to control operation of the stand-alone telephone answering system;
a display coupled to said controller;
a data input device coupled to said controller; and
a caller directory memory coupled to said controller containing caller identification information.

2. The answering system of claim 1, operable to receive caller identification information through said telephone line interface and to selectively transmit messages to another location through the telecommunications network responsive to said caller identification information.

3. The answering system of claim 1 or claim 2, further comprising a sensor coupled to said controller, the answering system selectively transmitting a message stored in said message storage memory upon a signal from said sensor.

4. The answering system of claim 3, wherein the sensor comprises a temperature sensor, the answering system selectively transmitting the message stored in said message storage memory upon said temperature sensor detecting the occurrence of a predetermined event.

5. The answering system of claim 3, wherein the sensor comprises an alarm sensor said controller selectively transmitting the message stored in said message storage memory upon said alarm sensor detecting the occurrence of a predetermined event.

6. The answering system of any preceding claim, wherein the system selectively transmits a message stored in said message storage memory when said message storage memory is storing a predetermined number of messages.

7. The answering system of any preceding claim and being operable to allow access to a mailbox in said message storage memory based upon caller identification information received.

8. The answering system of any preceding claim, and being operable to playback messages in a priority order based upon caller identification information.

9. The answering system of any preceding claim, and being operable to broadcast messages to other locations based upon caller identification information.

10. The answering system of claim 9, wherein the broadcast message includes individualized information stored in said caller directory memory.

11. The answering system of claim 10, wherein said individualized information is a recording of the name of the person receiving said broadcast message.

12. The answering system of any of claims 9 to 11, and being operable to receive an acknowledgement of reception of said broadcast message over said telephone line interface.

13. The answering system of any preceding claim, and being operable to transmit a different outgoing message selected from a plurality of outgoing messages stored in said message storage memory.

14. The answering system of any preceding claim, and being operable to monitor the total number of messages stored in said message storage memory.

15. The answering system of any preceding claim, and being operable to monitor a total of the calls received through said telephone line interface.

16. The answering system of any preceding claim, and being operable to reply to a received message upon receiving a single key input from a user during playback of a message stored in said message storage memory.

17. The answering system of any preceding claim, in the form of a stand-alone unit.

18. A method for operating a telephone answering system, comprising the steps of:
storing caller identification information in a caller directory memory;
receiving an incoming call from a telephone line interface;
receiving caller identification information from the telephone line interface;
comparing the received caller identification information to the stored caller identification information in the caller directory memory in order to identify a caller;
receiving an incoming message from the caller; and
storing the incoming message in a message storage memory.

19. The method of claim 18, further comprising the steps of:
configuring the stand-alone telephone answering system to forward the incoming messages based upon the received caller identification information;
forwarding the incoming messages to a location specified in the caller directory memory.

20. The method of claim 18 or claim 19, further comprising the step of broadcasting a message to other locations based upon caller identification information contained in the caller directory memory.

21. The method of claim 20, further comprising the step of receiving an acknowledgement of reception of the broadcast message.

22. The method of any of claims 18 to 21, further comprising the steps:
playing back messages stored in the message storage memory;
receiving a single key input from a user during playback of a message;
determining the location to reply to the message from the caller directory memory; and
replying to the message.

23. The method of any of claims 18 to 22, further comprising the steps of:
receiving status information from a monitoring device; and
initiating a call to a location specified in the caller directory memory based upon existence of a predetermined threshold at the monitoring device.

24. The method of of any of claims 18 to 23, further comprising the step of initiating a call to a location specified in the caller directory memory when the message storage memory is storing a predetermined amount of messages.
